Europäisches Patentamt

European Patent Office

Office européen des brevets

(11) Veröffentlichungsnummer: **0 480 366 A1**

# (12) EUROPÄISCHE PATENTANMELDUNG

(21) Anmeldenummer: **91117126.2**

(22) Anmeldetag: **08.10.91**

(51) Int. Cl.5: **F16D 65/02**

(30) Priorität: **09.10.90 DE 9014039 U**

(43) Veröffentlichungstag der Anmeldung:
**15.04.92 Patentblatt 92/16**

(84) Benannte Vertragsstaaten:
**DE ES FR GB IT**

(71) Anmelder: **LUCAS INDUSTRIES PUBLIC LIMITED COMPANY**
**Brueton House, New Road**
**Solihull, West Midlands B91 3TX(GB)**

(72) Erfinder: **Schroeter, Christian**
**Friedrich-Spee-Strasse 1**
**W-5485 Sinzig(DE)**
Erfinder: **Zenzen, Guido**
**Orffstrasse 30**
**W-5450 Neuwied 21(DE)**

(74) Vertreter: **von Hellfeld, Axel, Dipl.-Phys. Dr. et al**
**Wuesthoff & Wuesthoff Patent- und Rechtsanwälte Schweigerstrasse 2**
**W-8000 München 90(DE)**

(54) **Teilbelag-Scheibenbremse.**

(57) Teilbelag-Scheibenbremse mit einem Bremsträger, der an einem Fahrzeug befestigbar ist, einem Schwimmrahmen (14), der eine Bremsscheibe der Bremse übergreift und am Bremsträger geführt ist, Bremsbacken (16, 24), die auf je einer Seite der Bremsscheibe angeordnet und am Bremsträger gegen Bremskräfte abgestützt sind, zumindest einem Paar Betätigungskolben, die am Schwimmrahmen (14) annähernd symmetrisch in bezug auf eine axiale Mittelebene des Bremsträgers angeordnet sind, wobei auf jeder Seite der Bremsscheibe zwei voneinander getrennte Bremsbacken (16, 16', 24, 24') angeordnet sind, die im Einbauzustand der Bremse im wesentlichen radial in bezug auf die Achse (A) der Bremse ausbaubar sind und wobei sich die im Einbauzustand der Bremse auf der fahrzeugäußeren Seite der Bremsscheibe angeordneten Bremsbacken (16, 16') am Schwimmrahmen (14) abstützen, und die Abstützung der im Einbauzustand der Bremse auf der fahrzeugäußeren Seite der Bremsscheibe angeordneten Bremsbacken über Stifte (60, 62, 64) erfolgt, die am Schwimmrahmen (14) befestigt sind und sich parallel zur Achse (A) der Bremse erstrecken.

FIG. 4

Die Erfindung betrifft eine Teilbelag-Scheibenbremse mit einem Bremsträger, der an einem Fahrzeug befestigbar ist, einem Schwimmrahmen, der eine Bremsscheibe der Bremse übergreift und am Bremsträger geführt ist, Bremsbacken, die auf je einer Seite der Bremsscheibe angeordnet und direkt oder indirekt am Bremsträger gegen Bremskräfte abgestützt sind, zumindest einem Paar Betätigungskolben, die am Schwimmrahmen annähernd symmetrisch in bezug auf eine axiale Mittelebene des Bremsträgers angeordnet sind, wobei auf jeder Seite der Bremsscheibe zwei voneinander getrennte Bremsbacken angeordnet sind, die im Einbauzustand der Bremse im wesentlichen radial in bezug auf die Achse der Bremse ausbaubar sind und sich die im Einbauzustand der Bremse auf der fahrzeugäußeren Seite der Bremsscheibe angeordneten Bremsbacken am Schwimmrahmen abstützen.

Weiterhin betrifft die Erfindung auch eine Abstützung für einen Bremsbacken in einer Scheibenbremse sowie einen Bremsbacken selbst für eine solche Bremse.

Eine Teilbelag-Scheibenbremse der eingangs genannten Art ist aus der EP 90 115 308.0 und dem DE-GM 89 09 654.1 bekannt. Die vorliegende Erfindung betrifft insbesondere eine Verbesserung dieser bekannten Teilbelag-Scheibenbremse hinsichtlich einer einfachen und damit kostengünstigen Herstellung der Bremse, einer einfachen Montage und einer geringen Baugröße.

Erfindungsgemäß wird diese Aufgabe bei einer Teilbelag-Scheibenbremse der eingangs genannten Art dadurch gelöst, daß die Abstützung der im Einbauzustand der Bremse auf der fahrzeugäußeren Seite der Bremsscheibe angeordneten Bremsbacken über Stifte erfolgt, die am Schwimmrahmen befestigt sind und sich parallel zur Achse der Bremse erstrecken.

Bevorzugt ist vorgesehen, daß die drei Stifte je einen Bremsbacken derart abstützen, daß ein Stift zentrisch an einer radial inneren Kante des Bremsbackens und zwei Stifte beidseits des Bremsbackens an dessen einlauf- bzw. auslaufseitigen Kanten anliegen.

Weist gemäß der eingangs bereits genannten EP 90 115 308.0 der Schwimmrahmen ein Querjoch auf, an dem die zwei im Einbauzustand der Bremse auf der fahrzeugäußeren Seite der Bremsscheiben angeordneten Bremsbacken abgestützt sind, so ist zur weiteren Vereinfachung der Herstellung der Bremse und damit zur Reduzierung ihrer Kosten gemäß einer bevorzugten Ausgestaltung der Erfindung vorgesehen, daß das Querjoch an seiner den Bremsbacken zugekehrten Seite flache, bearbeitete Erhebungen aufweist, zwischen denen unbearbeitete Vertiefungen liegen. Die Höhe der Erhebungen ist dabei so flach wie möglich und beträgt typischerweise ca. 1 mm.

Die Erfindung lehrt überdies auch unabhängig von der vorstehend beschriebenen Teilbelag-Scheibenbremse mit Paaren von Betätigungskolben auch allgemein eine Abstützung für einen Bremsbacken einer Scheibenbremse, wobei die Abstützung erfindungsgemäß durch drei Stifte gebildet ist, die an einem Bremsträger oder einem Bremssattel (Schwimmrahmen od. dergl.) derart befestigt sind, daß sie sich parallel zur Achse der Bremse erstrecken, wobei ein Stift an der radial inneren Kante des Bremsbackens und zwei Stifte beidseits des Bremsbackens an dessen einlauf- bzw. auslaufseitigen Kanten anschlagen.

Ein erfindungsgemäß ausgestalteter Bremsbacken für eine Teilbelag-Scheibenbremse zeichnet sich dadurch aus, daß an der radial inneren Kante des Bremsbackens eine Ausnehmung zur Aufnahme eines Stiftes vorgesehen ist und daß an den einlauf- und auslaufseitigen Kanten Nasen mit einer gerundeten Fläche ausgeformt sind, an die jeweils ein Stift zur Anlage kommt.

Nachfolgend wird ein Ausführungsbeispiel der Erfindung anhand der Zeichnung näher beschrieben. Es zeigt:

Fig. 1    schematisch eine Teilbelag-Scheibenbremse in Draufsicht;

Fig. 2    eine Ansicht eines Teils der Teilbelag-Scheibenbremse gemäß Fig. 1 in Richtung des Pfeiles X von Fig. 1;

Fig. 3    einen Schnitt durch eine Teilbelag-Scheibenbremse gemäß Fig. 1 senkrecht zur Zeichenebene entlang der Achse A der Bremse;

Fig. 4    eine Ansicht eines Teils der Scheibenbremse gemäß Fig. 1 in Richtung des Pfeiles Y von Fig. 1.

Die in den Figuren dargestellte Teilbelag-Scheibenbremse entspricht in wesentlichen Grundzügen der eingangs genannten EP 90 115 308 sowie dem DE-GM 89 09 654, deren Kenntnis für das Verständis der nachfolgenden Beschreibung vorteilhaft ist.

Die Position einer Bremsscheibe ist in den Figuren mit dem Bezugszeichen 10 angedeutet. Ein Bremsträger 12 ist ortsfest in bezug auf ein Fahrzeug befestigt.

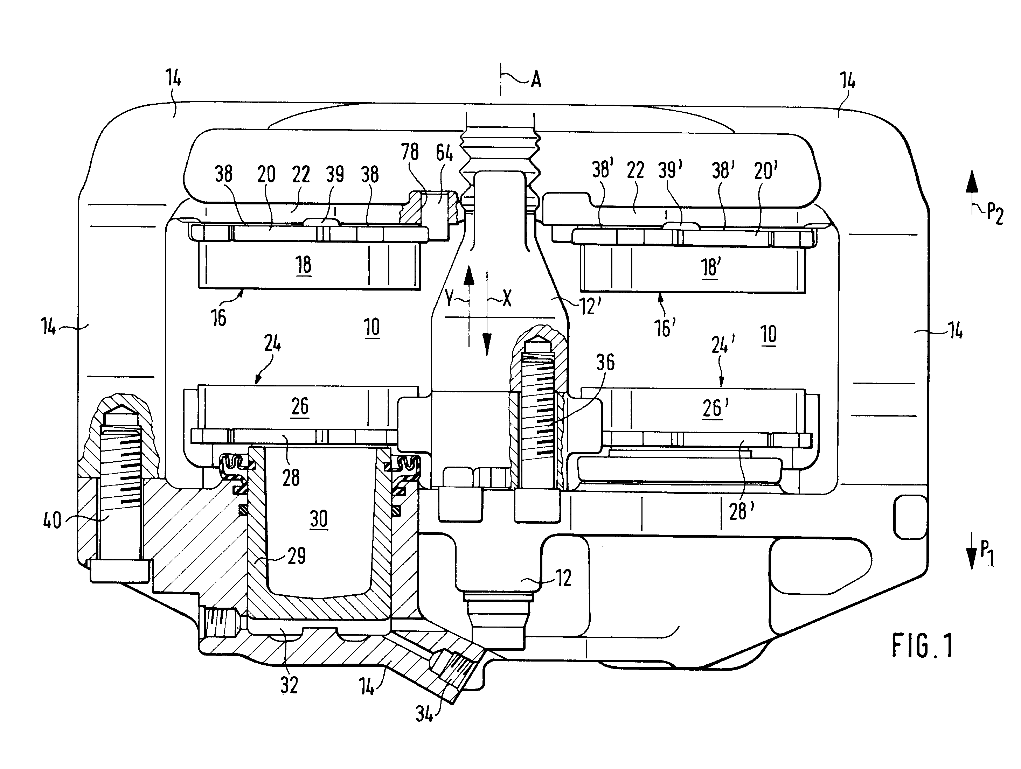

Ein Schwimmrahmen 14 übergreift die Bremsscheibe 10. Im Einbauzustand der Bremse im Fahrzeug ist die fahrzeugäußere Seite der Bremse in Fig. 1 mit dem Pfeil $P_2$ angedeutet, während die fahrzeuginnere Seite der Bremse mit dem Pfeil $P_1$ bezeichnet ist. In bezug auf die Bremsscheibe 10 hat die Bremse somit fahrzeuginnere und fahrzeugäußere Bauteile, je nach dem, ob die Bauteile auf der durch den Pfeil $P_2$ angedeuteten Seite der Bremsscheibe 10 liegen oder auf der durch den Pfeil $P_1$ angegebenen Seite.

Auf der fahrzeugäußeren Seite $P_2$ ist der

Schwimmrahmen 14 mit zwei Bremsbacken 16, 16' versehen. In bekannter Weise weist jeder Bremsbacken einen Reibbelag 18 bzw. 18' auf sowie Rückenplatten 20 bzw. 20'.

Die Befestigung der Bremsbacken 16, 16' am Schwimmrahmen 14 erfolgt über ein Querjoch 22 des letzteren.

Fahrzeuginnenseitig weist die Bremse zwei Bremsbacken 24, 24' auf, die ebenfalls jeweils Reibbeläge 26, 26' und Rückenplatten 28, 28' aufweisen.

Die Betätigung der Bremse erfolgt mittels zweier Kolben 29 (in Fig. 1 nur einer links im einzelnen gezeigt), welche zur Material- und Gewichtseinsparung einen Hohlraum 30 haben und in einem Zylinder in bekannter Weise geführt sind. In einem Druckraum 32 wird über einen Einlaß 34 mittels einer Hydraulikflüssigkeit ein Bremsdruck erzeugt, der in Fig. 1 die beiden Kolben in Richtung des Pfeiles Y nach oben bewegt. Dabei kommen die Bremsbacken 24, 24' in Anlage an die Bremsscheibe 10. Wegen des Grundsatzes "actio = reactio" bewegt sich entsprechend der Bewegung des Kolbens 29 nach oben der gesamte Schwimmrahmen 14 in Fig. 1 nach unten, d.h. in Richtung des Pfeiles X. Der die Bremsscheibe 10 übergreifende Schwimmrahmen 14 (insbesondere Fig. 1) bringt somit die Bremsbacken 16, 16' in Anlage an die äußere Seite der Bremsscheibe 10.

Der Schwimmrahmen 14 besteht aus Einzelteilen, die mittels Schraubenbolzen 40 aneinander befestigt sind.

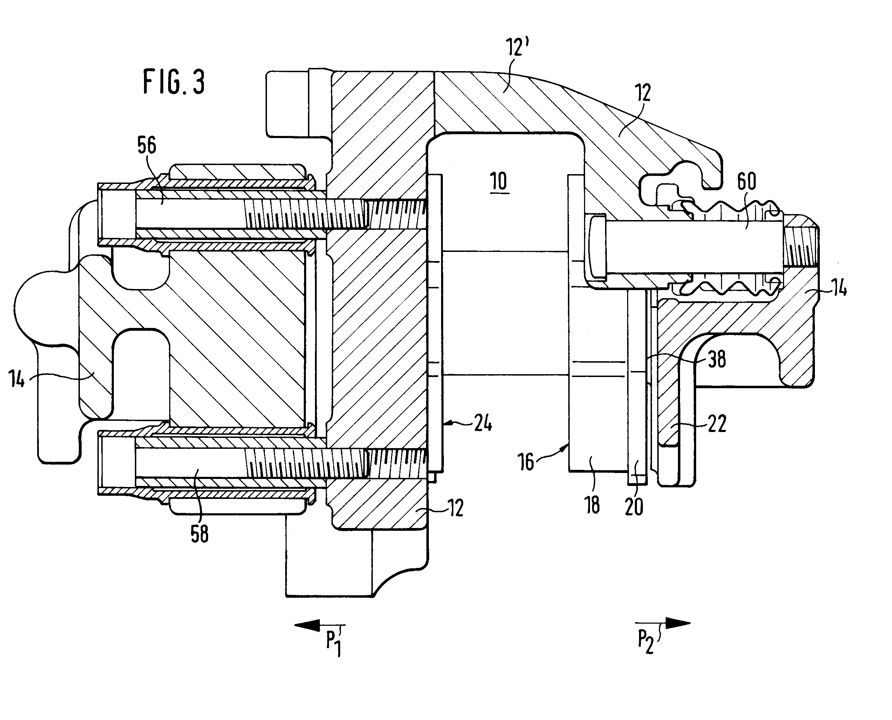

Wie den Fig. 1 und 3 zu entnehmen ist, erfolgt die Befestigung der fahrzeugaußenseitig der Bremsscheibe 10 angeordneten Bremsbacken 16, 16' auf dem Querjoch 22 derart, daß die Rückenplatten 20, 20' jeweils auf Erhebungen 38 abgestützt sind, die auf der den Bremsbacken zugekehrten Seite des Querjoches 22 ausgebildet sind. Zwischen den Erhebungen finden sich Vertiefungen 39. Dies ermöglicht eine kostengünstige und gleichzeitig paßgenaue Anordnung der Bremsbacken in der Bremse, da das gegossene Querjoch 22 mit einfachen Werkzeugen nur im Bereich der Erhebungen 38 spanabhebend bearbeitet zu werden braucht.

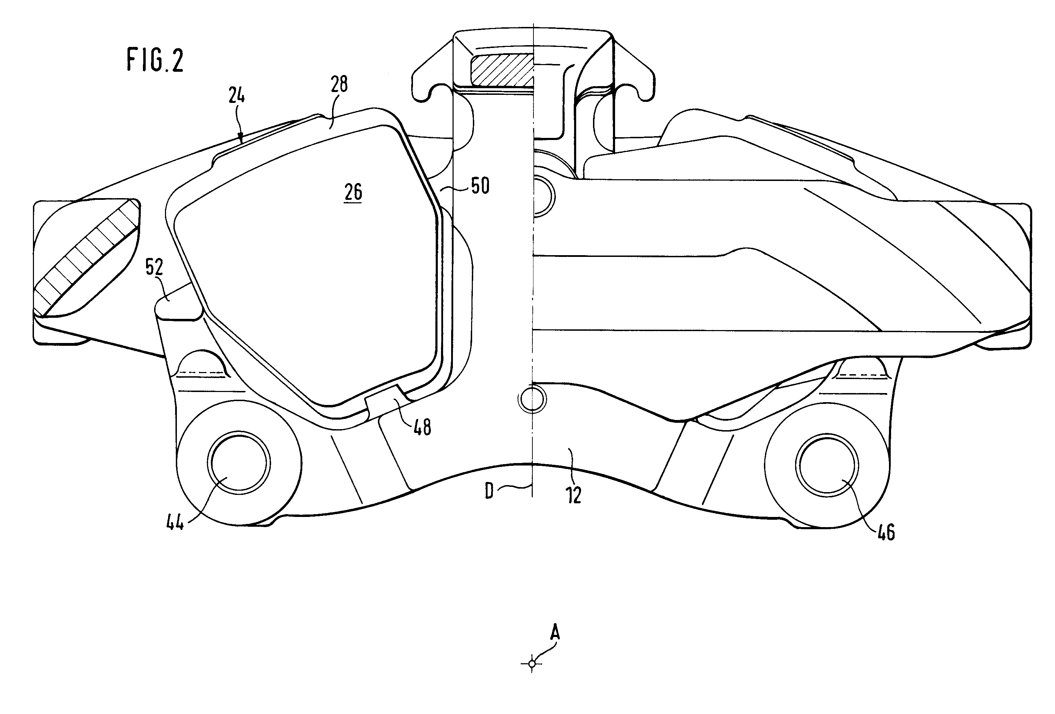

Fig. 2 zeigt schematisch eine Ansicht der Scheibenbremse in Richtung des Pfeils X in Fig. 1 und illustriert die Abstützung der fahrzeuginnenseitig der Bremsscheibe 10 angeordneten Bremsbacken 24, 24'. Diese Bremsbacken sind direkt am fahrzeugfesten Bremsträger 12 angestützt. Der Bremsträger 12 ist mittels Schraubenbolzen 44, 46 am Fahrzeug befestigt und weist Ansätze 48, 50 und 52 auf, welche mit Kanten der Rückenplatte 28 des Bremsbackens 24 in Eingriff kommen. Entsprechendes gilt für die Abstützung des anderen fahrzeuginnenseitigen Bremsbackens 24'.

Die Ansätze 48, 50 und 52 sind so ausgebildet, daß ein Bremsbacken 24 in einfacher Weise radial zwischen die Ansätze schiebbar ist und auch in einfacher Weise radial entnehmbar ist. Der Begriff "radial" bezieht sich auf die Bremsachse A (Fig. 1 und 2).

Die Bremsbacken 24, 24' werden in radialer Richtung durch Federn (nicht gezeigt) gegen die Ansätze 48 gedrückt. Zur Vereinfachung der Montage der Bremsbacken sind diese (d.h. die Bremsbacken) leicht konisch zulaufend ausgeformt.

Fig. 3 zeigt einen Schnitt entlang der mittleren Symmetrieebene D (Fig. 2) der Bremse, d.h. in Fig. 1 einen Schnitt senkrecht zur Papierebene in Höhe der Achse A.

Wie Fig. 3 zu entnehmen ist, ist der Schwimmrahmen 14 in bezug auf den ortsfesten Bremsträger 12 durch zwei Führungsbolzen 56, 58 verschiebbar abgestützt. Dies ist aus dem eingangs zitierten Stand der Technik als solches bekannt, ebenso der fahrzeugaußenseitig die gleitende Verbindung des Schwimmrahmens 14 in bezug auf den Bremsträger 12 vorgesehene Führungsbolzen 60. Der die Bremsscheibe 10 übergreifende Brückenabschnitt des ortsfesten Bremsträgers 12 ist in Fig. 3 mit dem Bezugszeichen 12' versehen (siehe auch Fig. 1).

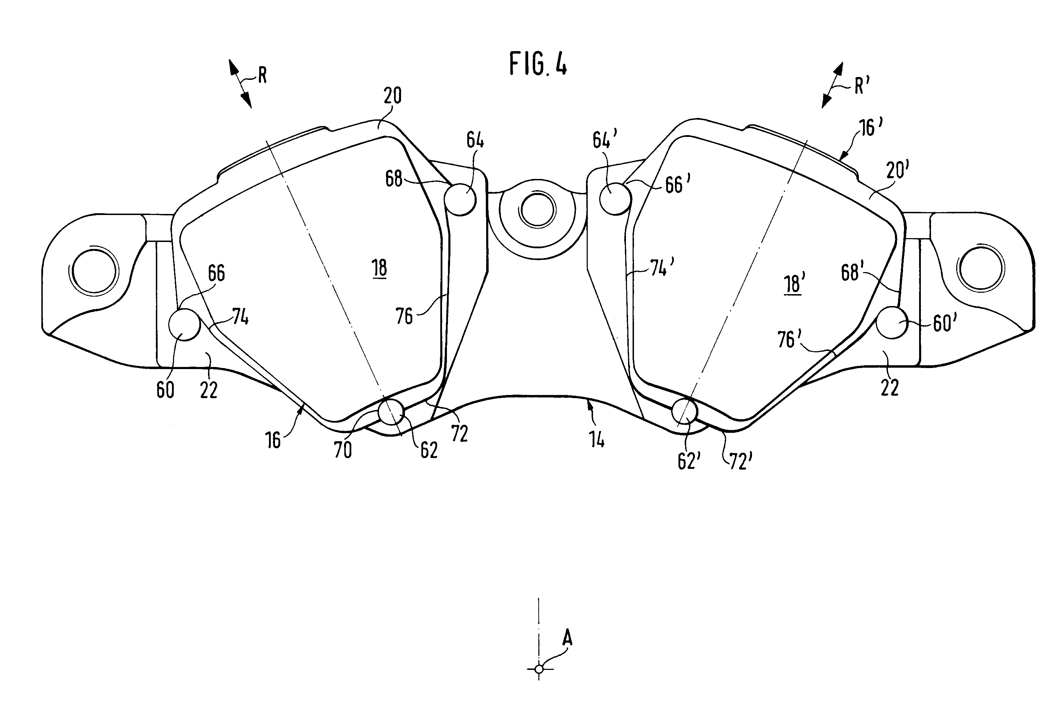

Fig. 4 zeigt Einzelheiten der Abstützung der fahrzeugaußenseitig angeordneten Bremsbacken 16, 16'.

Am Querjoch 22 des Schwimmrahmens 14 sind Stifte 60, 62, 64 bzw. 60', 62', 64' befestigt. Diese Stifte bilden Abstützungen und Führungen für die beiden Bremsbacken 16, 16'.

Die Bremsbacken werden in Richtung der Pfeile R bzw. R' radial in Richtung auf die Achse A der Bremse eingeschoben. Dabei kommt eine Ausnehmung 70 an der radial inneren Kante 72 des Bremsbackens 16 in Eingriff mit dem Stift 62. Weiterhin sind an den einlaufseitigen und auslaufseitigen Kanten 74, 76 und 74', 76' der Bremsbacken 16 bzw. 16' jeweils Nasen 66, 68 bzw. 66', 68' vorgesehen, die radial innenseitig abgerundete Flächen aufweisen, welche mit den Stiften 60, 64 bzw. 60', 64' in Eingriff kommen. Somit sind die Bremsbacken 16, 16' in Richtung der Pfeile R bzw. R' in einfacher Weise montier- sowie demontierbar. Federn (nicht gezeigt) drücken die Bremsbacken radial gegen die Stifte.

Wie Fig. 1 zu entnehmen ist, sind die Stifte (in Fig. 1 nur anhand des Stiftes 64 gezeigt) in Sackbohrungen 78 im Schwimmrahmen 14 eingepaßt. Bevorzugt sind die drei Stifte gleich.

Die vorstehend beschriebene Ausgestaltung einer Teilbelag-Scheibenbremse sowie der zugehörigen Abstützung der Bremsbacken und der Bremsbacken selbst ermöglicht eine einfache Herstellung der Bremse mit wenig Aufwand bei geringem Volumen der Bremse. Die Teile des Schwimmrahmens können vorteilhaft in einer einzigen Aufspannung fertig bearbeitet werden. Die einzelnen Höhen der Schwimmrahmenteile sowie die Bohrungen zur Aufnahme der Stifte als auch die Bohrungen zur Aufnahme der Verbindungs-Schraubenbolzen und die Bohrungen zur Aufnahme von Führungsbolzen können in dieser Aufspannung gefertigt werden. Eine Räumnadel kann in der Darstellung gemäß Fig. 4 von oben nach unten durch den Schwimmsattel fahren und bearbeitet die auf den Erhebungen 38 zu erzeugenden Anlageflächen für die Rückenplatten. Diese Flächen können auch mit einem Fräser großen Durchmessers erzeugt werden.

**Patentansprüche**

1.  Teilbelag-Scheibenbremse mit
    -   einem Bremsträger (12), der an einem Fahrzeug befestigbar ist,
    -   einem Schwimmrahmen (14), der eine Bremsscheibe (10) der Bremse übergreift und am Bremsträger (12) geführt ist,
    -   Bremsbacken (16, 24), die auf je einer Seite der Bremsscheibe (10) angeordnet und am Bremsträger (12) gegen Bremskräfte abgestützt sind,
    -   zumindest einem Paar Betätigungskolben (29), die am Schwimmrahmen (14) symmetrisch in bezug auf eine axiale Mittelebene (D) des Bremsträgers (12) angeordnet sind, wobei
    -   auf jeder Seite der Bremsscheibe (10) zwei voneinander getrennte Bremsbacken (16, 16', 24, 24') angeordnet sind, die im Einbauzustand der Bremse im wesentlichen radial in bezug auf die Achse (A) der Bremse ausbaubar sind und
    -   sich die im Einbauzustand der Bremse auf der fahrzeugäußeren Seite (P₂) der Bremsscheibe (10) angeordneten Bremsbacken (16, 16') am Schwimmrahmen (14) abstützen,
    dadurch **gekennzeichnet,** daß
    -   die Abstützung der im Einbauzustand der Bremse auf der fahrzeugäußeren Seite (P₂) der Bremsscheibe (10) angeordneten Bremsbacken über Stifte (60, 62, 64) erfolgt, die am Schwimmrahmen (14) befestigt sind und sich parallel zur Achse (A) der Bremse erstrecken.

2.  Scheibenbremse nach Anspruch 1, dadurch **gekennzeichnet**, daß je drei Stifte (60, 62, 64) einen Bremsbacken (16, 16') derart abstützen, daß ein Stift (62) zentrisch an einer radial inneren Kante (72) des Bremsbakkens und zwei Stifte (60, 64) beidseits des Bremsbackens an dessen einlauf- bzw. auslaufseitigen Kanten (74, 76) anliegen.

3.  Scheibenbremse nach einem der Ansprüche 1 oder 2, wobei der Schwimmrahmen (14) ein Querjoch (22) aufweist, an dem die zwei im Einbauzustand der Bremse auf der fahrzeugäußeren Seite (P₂) der Bremsscheibe (10) angeordneten Bremsbacken (16, 16') in axialer Richtung abgestützt sind, dadurch **gekennzeichnet,** daß das Querjoch (22) an seiner den Bremsbacken (16, 18) zugekehrten Seite flache, bearbeitete Erhebungen (38) aufweist.

4.  Scheibenbremse nach Anspruch 3, dadurch **gekennzeichnet,** daß die Stifte (60, 62, 64) in Bohrungen (78) eingepaßt sind, die in den flachen, bearbeiteten Erhebungen (38) ausgebildet sind.

5.  Abstützung für einen Bremsbacken (16, 16') einer Scheibenbremse, **gekennzeichnet** durch drei Stifte (60, 62, 64), die an einem Bremsträger oder einem Bremssattel derart befestigt sind, daß sie sich parallel zur Achse (A) der Bremse erstrecken und ein Stift (62) an der radial inneren Kante (72) des Bremsbackens und zwei Stifte (60, 64) beidseits des Bremsbackens an dessen einlauf- bzw. auslaufseitigen Kanten (74, 76) anliegen.

6.  Bremsbacken für eine Teilbelag-Scheibenbremse gemäß einem der Ansprüche 1 bis 5, dadurch **gekennzeichnet,** daß an der radial inneren Kante (72) des Bremsbackens (16) eine Ausnehmung (70) zur Aufnahme eines Stiftes vorgesehen ist und daß an den einlauf- und auslaufseitigen Kanten (74, 76) Nasen (66, 68) mit einer gerundeten Aufnahmefläche für jeweils einen Stift ausgeformt sind.

FIG. 1

FIG.2

EP 0 480 366 A1

FIG. 3

FIG.4

EP 0 480 366 A1

**Europäisches Patentamt**

# EUROPÄISCHER RECHERCHENBERICHT

Nummer der Anmeldung

**EP 91 11 7126**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,P,A | EP-A-0 412 541 (LUCAS INDUSTRIES) <br> * das ganze Dokument * <br> – – – | 1 | F 16 D 65/02 |
| D,P,A | DE-U-8 909 654 (LUCAS INDUSTRIES) <br> – – – – – | | |

**RECHERCHIERTE SACHGEBIETE (Int. Cl.5)**

F 16 D

Der vorliegende Recherchenbericht wurde für alle Patentansprüche erstellt

| Recherchenort | Abschlußdatum der Recherche | Prüfer |
|---|---|---|
| Berlin | 16 Januar 92 | LUDWIG H J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
----------------------------------
& : Mitglied der gleichen Patentfamilie, übereinstimmendes Dokument